# EUROPEAN PATENT APPLICATION

(11) **EP 4 643 966 A1**
(43) Date of publication of application: **05.11.2025**
(21) Application number: 22969881.6
(22) Date of filing: 30.12.2022
(51) Int. Cl.: A63H 27/133

(54) **CONTROL METHOD AND APPARATUS FOR MOVABLE PLATFORM, MOVABLE PLATFORM AND STORAGE MEDIUM**

(71) Applicant: SZ DJI Technology Co., Ltd., Shenzhen, Guangdong 518057 (CN)
(72) Inventor: XU, Tianye, Shenzhen, Guangdong 518057 (CN); MO, Songquan, Shenzhen, Guangdong 518057 (CN)
(74) Representative: Goddar, Heinz J.
(86) International application number: PCT/CN2022/144345
(87) International publication number: WO 2024/138741

(57) **Abstract**

A control method and apparatus for a movable platform, a movable platform and a storage medium are provided. The method comprises: receiving a first operation and a second operation input by a user, where the first operation and the second operation are operations on different objects of a motion-sensing controller, and one of the first operation and the second operation is a motion-sensing control operation of the motion-sensing controller; and in response to the first operation and the second operation, generating a control instruction, where the control instruction is used to control the movable platform, and the control instruction causes an angle greater than 0° to be formed between a nose direction of the movable platform and a horizontal component direction of a movement velocity of the movable platform.

## Description

### Technical Field

The present application relates to the field of control, and in particular to a control method and apparatus for a movable platform, a movable platform and a storage medium.

### Background Art

A motion-sensing remote controller provides a brand-new experience for controlling movable platforms such as aircraft, allowing users to control the movement of the movable platform by adjusting the attitude of the motion-sensing remote controller. However, when performing motion control with the motion-sensing remote controller, the movement direction of the movable platform always changes according to the orientation of the nose (nose direction) of the aircraft, which results in a low degree of freedom when using the motion-sensing remote controller to control the movable platform.

### Summary of the Invention

Based on this, embodiments of the present application provide a control method and apparatus for a movable platform, a movable platform and a storage medium, aiming to solve the problem of the low degree of freedom when users control the movable platform using a motion-sensing controller.

In a first aspect, the present application provides a control method for a movable platform, comprising:
Receiving a first operation and a second operation input by a user, where the first operation and the second operation are operations performed on different objects in a motion-sensing controller, and one of the first operation and the second operation is a motion-sensing control operation of the motion-sensing controller;
In response to the first operation and the second operation, generating a control instruction, where the control instruction is configured to control the movable platform, and the control instruction enables an angle greater than 0° to be formed between a nose direction of the movable platform and a horizontal component of a velocity vector of the movable platform.

In a second aspect, the present application provides a control device for a movable platform, comprising a memory and a processor;
The memory is configured to store a computer program;
The processor is configured to execute the computer program and, when executing the computer program, implement the following steps:
   Receiving a first operation and a second operation input by a user, where the first operation and the second operation are operations performed on different objects in a motion-sensing controller, and one of the first operation and the second operation is an operation for changing a motion-sensing attitude of the motion-sensing controller;
   In response to the first operation and the second operation, generating a control instruction, where the control instruction is configured to control the movable platform, and the control instruction enables an angle greater than 0° to be formed between a nose direction of the movable platform and a horizontal component of a velocity vector of the movable platform.

In a third aspect, the present application further provides a motion-sensing controller, comprising:
A housing; and
A trigger assembly, movably connected to the housing, where the trigger assembly comprises a trigger and a reset member, the trigger is connected to the reset member and capable of moving relative to the housing, the reset member is configured to provide a resetting force that keeps the trigger at a target position; the trigger is capable of being subjected to the resetting force provided by the reset member during a movement thereof from the target position in a first direction or a second direction.

In a fourth aspect, the present application also provides a movable platform, comprising the control device as described in the first aspect.

In a fifth aspect, the present application also provides a computer-readable storage medium, where the computer-readable storage medium stores a computer program, and when the computer program is executed by a processor, the processor implements the steps of the control method as described in the first aspect.

In the embodiments of the present application, the motion-sensing controller can receive a first operation and a second operation from a user for different objects, one of the first operation and the second operation is an operation based on the motion-sensing control of a motion-sensing controller. The motion-sensing controller can respond to the first operation and the second operation to generate a control instruction. The control instruction is configured to control a movable platform and ensure that an angle greater than 0° is formed between the nose direction of the movable platform and a horizontal component of a velocity vector of the movable platform. In this way, when the user uses the motion-sensing controller to control the movable platform, more control strategies can be adopted, thereby increasing the degree of freedom of control.

It should be understood that the above general description and the detailed description below are only exemplary and explanatory, and do not limit the present application.

### Brief Description of the Drawings

In order to more clearly illustrate the technical solutions of the embodiments of the present application, a brief introduction to the drawings used in the description of the embodiments is provided below. It is evident that the drawings in the following description are some embodiments of the present application, and for a person skilled in the art, other drawings can be obtained based on these drawings without the need for inventive efforts.
FIG. 1 is a schematic diagram of an application scenario of a control system provided by some embodiments of the present application;
FIG. 2 is a flowchart of the steps of a control method provided by some embodiments of the present application;
FIG. 3 is a schematic diagram of one of the control scenarios of a movable platform provided by some embodiments of the present application;
FIG. 4 is a schematic diagram of one of the control scenarios of a movable platform provided by some embodiments of the present application;
FIG. 5 is a schematic diagram of one of the control scenarios of a movable platform provided by some embodiments of the present application;
FIG. 6 is a schematic diagram of one of the control scenarios of a movable platform provided by some embodiments of the present application;
FIG. 7 is a schematic diagram of one of the control scenarios of a movable platform provided by some embodiments of the present application;
FIG. 8 is a schematic diagram of one of the control scenarios of a movable platform provided by some embodiments of the present application;
FIG. 9 is a schematic diagram of one of the control scenarios of a movable platform provided by some embodiments of the present application;
FIG. 10 is a schematic diagram of one of the control scenarios of a movable platform provided by some embodiments of the present application;
FIG. 11 is a schematic diagram of one of the control scenarios of a movable platform provided by some embodiments of the present application;
FIG. 12 is a schematic diagram of the structure of a motion-sensing controller provided by some embodiments of the present application;
FIG. 13 is a schematic diagram of a part of the structure of a motion-sensing controller provided by some embodiments of the present application;
FIG. 14 is a schematic diagram of the structure of a trigger assembly of a motion-sensing controller provided by some embodiments of the present application;
FIG. 15 is a schematic diagram of the structure of a trigger assembly of a motion-sensing controller provided by some embodiments of the present application;
FIG. 16 is a schematic diagram of the structure of a trigger assembly of a motion-sensing controller provided by some embodiments of the present application;
FIG. 17 is a schematic diagram of the structure of a thumbwheel assembly of a motion-sensing controller provided by some embodiments of the present application;
FIG. 18 is a schematic diagram of the structure of a thumbwheel assembly of a motion-sensing controller provided by some embodiments of the present application;
FIG. 19 is a schematic diagram of a part of the structure of a motion-sensing controller provided by some embodiments of the present application;
FIG. 20 is a schematic diagram of a control interface provided by some embodiments of the present application; and
FIG. 21 is a schematic diagram of the structure of a control device provided by some embodiments of the present application.

### Description of the Embodiments

The following will describe the technical solutions of the embodiments of the present application in a clear and complete manner with reference to the drawings in the embodiments of the present application. Clearly, the described embodiments are part of the embodiments of the present application, rather than all the embodiments. All other embodiments that a person skilled in the art can obtain based on the embodiments in this application, without making inventive efforts, fall within the scope of protection of this application.

The flowcharts shown in the drawings are only for illustrative purposes and do not necessarily comprise all the contents and operations/steps, nor must they be executed in the order described. For example, some operations/steps may be decomposed, combined, or partially merged, so the actual execution sequence may change depending on the actual situation.

The following detailed description of some embodiments of the present application is made with reference to the drawings. Where there is no conflict, the embodiments and features within the embodiments described below may be combined with each other.

Some embodiments of the present invention disclose a motion-sensing control method for a movable platform, as well as a corresponding control system. The movable platform can be an unmanned aerial vehicle (UAV), a ground mobile robot, a water-surface motion-sensing control robot, or any platform that can be controlled by means of motion sensing. In the illustrated embodiments, a UAV is used as an example for detailed explanation. It should be understood that when the movable platform is a UAV, the motion process of the movable platform can be regarded as the flight process of the UAV.

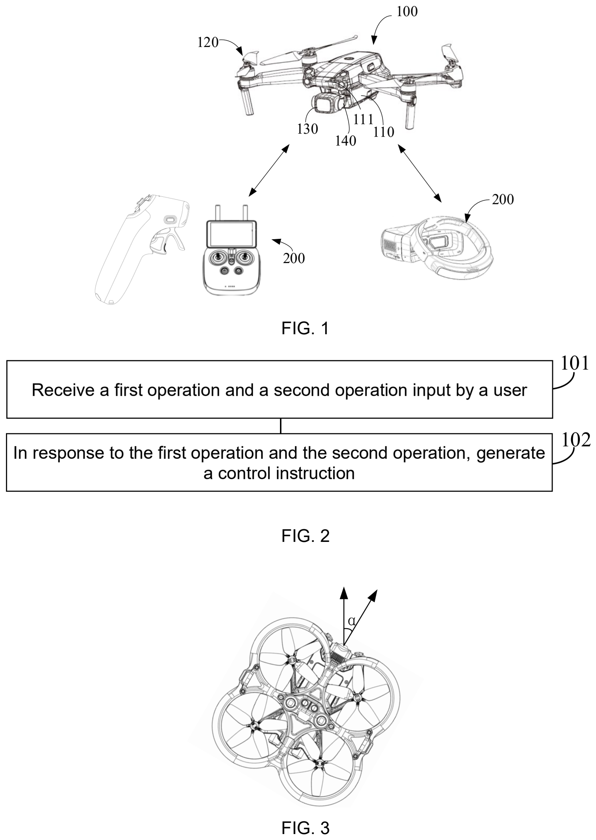

FIG. 1 is a schematic diagram of an application scenario of a control system provided by some embodiments of the present application. As shown in FIG. 1, a control system comprises an aircraft 100 and a control terminal 200. The aircraft 100 can be in communication with the control terminal 200. The control terminal 200 can be used to control the aircraft 100. The control terminal 200 can comprises at least one of a remote controller, a motion-sensing controller, a smartphone, or a tablet, and may also comprise at least one of a remote controller, a smartphone, or a wearable device. The wearable device comprises a head-mounted display. The head-mounted display can comprise a virtual reality (VR) display device or a first-person view (FPV) display device.

In some embodiments, the aircraft 100 comprises a body 110, a power system 120, an imaging device 130, and a control device (not shown in FIG. 1). The body 110 can comprise a nose 111. In certain embodiments, the aircraft 100 further comprises arms, where the arms are connected to the body 110 and are used to mount the power system. In some embodiments, the power system 120 can be directly mounted on the body 110.

The power system 120 is used to provide flight power for the aircraft. The power system 120 can comprise motors and propellers. The propellers are mounted on the motors and driven by the motors. The power system 120 can drive the body 110 of the aircraft 100 to rotate around one or more rotational axes. For example, the rotational axes can comprise a roll axis, a yaw axis, and a pitch axis. When the power system 120 drives the body 110 to rotate around the yaw axis, the yaw orientation of the nose of the body may change, meaning that the yaw rotation of the body 110 can be controlled by controlling the power system 120. It should be understood that the motors can be either direct current (DC) motors or alternating current (AC) motors. Additionally, the motors can be brushless motors or brushed motors.

The imaging device 130 is directly mounted on or carried by a gimbal 140, which is connected to the body 110, and is used to capture images, which can be still images and/or videos. In some embodiments, as shown in FIG. 1, the aircraft can comprise the gimbal 140, with the imaging device 130 mounted on the gimbal 140, and the gimbal 140 being connected to the body 110. In some embodiments, the gimbal 140 can control the yaw rotation of the imaging device 130 to adjust the yaw orientation of the imaging device 130. Specifically, the gimbal 140 may comprise a yaw motor 141, which is used to control the yaw rotation of the imaging device 130. In some embodiments, the gimbal 140 can also control the pitch rotation of the imaging device 130 to adjust the pitch orientation of the imaging device 130. Specifically, the gimbal 140 may comprise a pitch motor, which is used to control the pitch rotation of the imaging device 130. In some embodiments, the gimbal 140 can control the roll rotation of the imaging device 130 to adjust the roll orientation of the imaging device 130. Specifically, the gimbal 140 may comprise a roll motor, which is used to control the roll rotation of the imaging device 130.

In the yaw direction, the yaw rotation of the imaging device 130 and the yaw rotation of the body 110 can be associated. Furthermore, the imaging device 130 can follow the yaw rotation of the body 110, or the body 110 can follow the yaw rotation of the imaging device 130.

The control terminal may comprise an input device. The input device can detect a user's control operations on the control terminal. The control terminal can generate control instructions for the aircraft based on the user's control operations detected by the input device. For example, if the input device detects that the user has entered a yaw control operation for the nose on the control terminal, the control terminal can generate a yaw control instruction based on this control operation and send the nose yaw control instruction to the aircraft. If the input device detects that the user has entered a gimbal pitch control operation on the control terminal, the control terminal can generate a pitch control instruction based on this control operation and send the gimbal pitch control instruction to the aircraft.

As shown in FIG. 1, in some embodiments, the control terminal 200 comprises a remote controller. The remote controller is equipped with an input device and a communication device. The communication device is a wireless communication device. This wireless communication device can comprise at least one of a high-frequency radio transceiver, a Wi-Fi module, or a Bluetooth module. The input device is used to respond to the user's operation and generate corresponding control instructions, so that the remote controller can control the aircraft to adjust its flight attitude and/or flight velocity through these control instructions. The input device comprises at least one of a button, a joystick, a dial wheel, or a touch display screen. For example, the input device can be a joystick. The joystick is mounted on the body of the remote controller. The remote controller senses the user's yaw control operation of the joystick, generates the corresponding control instruction, and sends a first yaw control instruction to the aircraft 100 through the communication device.

In some embodiments, the control terminal 200 can receive images transmitted from the aircraft 100 and display them using a display device. The display device can be integrated into the control terminal 200, or the display device can be separately set and communicatively connected to the control terminal 200. The communication connection can be either wired or wireless. For example, the wireless communication connection can be via Wi-Fi, Bluetooth, or high-frequency radio signals.

A user can generate control instructions by using buttons, joysticks, or thumbwheels, or by inputting operations on a touch display screen, which is not limited herein.

The following will provide a detailed description of the control method for the aircraft, as provided by the embodiments of the present application, with reference to the scenario in FIG. 1. It should be noted that the scenario in FIG. 1 is used only to explain the control method for the movable platform provided by some embodiments of the present application, but does not limit the application scenarios of the control method for the movable platform.

FIG. 2 is a flowchart of the steps of a control method provided by some embodiments of the present application. The method comprises:
Step 101: Receive a first operation and a second operation input by a user, where the first operation and the second operation are operations for different objects in a motion-sensing controller, and one of them is a motion-sensing control operation of the motion-sensing controller.
Step 102: In response to the first operation and the second operation, generate a control instruction by a control terminal, where the control instruction is configured to control a movable platform, such that an angle between a nose direction of the movable platform and a horizontal component of a velocity vector of the movable platform is greater than 0°.

One of the first operation and the second operation can be an operation to change the motion-sensing attitude of the motion-sensing controller. It should be understood that the motion-sensing controller can be equipped with an attitude sensor, such as an Inertial Measurement Unit (IMU). The first operation and/or second operation can be an operation to change the measured value of the attitude sensor. For example, in some embodiments, the attitude sensor can be arranged at a handle of the motion-sensing controller, and the first operation and/or second operation can be an operation to change the attitude of the handle. Of course, in other optional embodiments, the first operation and second operation can also be operations to change the attitude of the entire motion-sensing controller or other components, which will not be listed herein.

Control instruction can be an instruction generated by a motion-sensing controller, which can be an instruction for communication with a movable platform. For example, in some embodiments, the control instruction can comprise measurement information obtained by the sensor of the motion-sensing controller, which is sent to the movable platform side, and then the movable platform side executes the corresponding control operation based on this measurement information. Of course, the control instruction can also comprise control information. The motion-sensing controller can also process the measurement information to obtain control information and send the control information to the movable platform, without limitation.

The nose direction of the movable platform can be understood as the horizontal attitude of the movable platform along the yaw axis. The movable platform can change the nose direction through rotation in place or steering operations during movement. The velocity vector of the movable platform can comprise the current direction of motion and the magnitude of the motion velocity of the movable platform. The horizontal component of the velocity vector can be the vector component of the velocity vector on the horizontal plane, and can also comprise the direction and magnitude of the motion velocity along the horizontal plane.

When an angle greater than 0° is formed between the nose direction of the movable platform and the horizontal component of the velocity vector of the movable platform, the nose direction of the movable platform can deviate relative to the direction of movement. In other words, the movable platform can move in a direction deviating from the direction of its nose. As shown in FIG. 3, the movable platform can move straight ahead in the direction shown in FIG. 3 while yawing at an angle of α, meaning that the angle between the nose direction and the direction of the horizontal component of the velocity vector is α. In this way, when a user controls the movable platform using a motion-sensing controller, the user can, through the first operation and the second operation, cause an angle greater than 0° to be formed between the nose direction of the movable platform and the horizontal component of the velocity vector of the movable platform, thereby increasing the degree of freedom in controlling the movable platform with the motion-sensing controller.

Furthermore, since the gimbal yaw axis of the movable platform can change along with the nose direction, when an angle greater than 0° is formed between the nose direction and the horizontal component of the velocity vector, the photographing direction of the movable platform can also form an angle greater than 0° with its movement. This allows a user to achieve more camera movement styles when controlling the movable platform with a motion-sensing controller, such as orbiting shots and point-of-interest tracking, thereby further enhancing the user experience.

The first operation and the second operation can be operations performed on different objects of the motion-sensing controller. In some embodiments, the first operation and the second operation can be operations performed on different components of the motion-sensing controller. For example, the first operation can be an operation on a joystick, while the second operation can be an operation on a handle. In some embodiments, the first operation and the second operation can also be operations on different physical elements of the same component of the motion-sensing controller. For example, the first operation can be an operation on the motion-sensing attitude in one axial direction of the motion-sensing controller, while the second operation can be an operation on the motion-sensing attitude in another axial direction of the motion-sensing controller.

Furthermore, in some embodiments, the motion-sensing controller can comprise a joystick. When the first operation and the second operation are performed on different components of the motion-sensing controller, the first operation can be an operation to change the stick control input of the joystick, while the second operation can be an operation to change the motion-sensing attitude of the motion-sensing controller.

It should be understood that the joystick can have one or more axial stick control inputs. That is, the first operation can change the stick control input(s) in one axial direction of the joystick or in multiple axial directions.

For example, a joystick typically has stick control inputs along the X-axis and Y-axis. The first operation can change only the stick control input in the X-axis or Y-axis, or it can change the stick control inputs in both the X-axis and Y-axis simultaneously.

Optionally, the motion-sensing controller can also comprise a trigger, and the method can further comprise:
Receiving a third operation from the user on the trigger; and generating the control instruction, which can specifically comprise:
Generating the control instruction based on the first operation, the second operation, and the third operation.

One of the first operation, second operation, and third operation is at least used to control the change in the direction of the velocity vector of the movable platform, one is at least used to control the change in the magnitude of the velocity vector of the movable platform, and another one is at least used to control the change in the nose direction of the movable platform.

The user can control the nose direction, the direction of the velocity vector, and the magnitude of the velocity vector of the movable platform through the first operation, second operation, and third operation. Any one of the first, second, and third operations can control one or more of the nose direction, the direction of the velocity vector, and the magnitude of the velocity vector, which is not limited herein.

Specifically, the third operation can be a push-pull operation on the trigger.

Optionally, to facilitate user control, the first operation, second operation, and third operation can respectively control the nose direction, velocity vector direction, and velocity vector magnitude of the movable platform.

Furthermore, when controlling the direction and/or magnitude of the velocity vector of the movable platform, it is possible to control a component along one of its axes. Specifically, this axis can be a coordinate axis in the body coordinate system or a coordinate axis in the photographing frame coordinate system, which is not limited herein.

In some embodiments, the control instruction can specifically be used to:
Control the movable platform to change a component of the velocity vector along one axis based on the first operation;
Control the movable platform to change the nose direction of the movable platform based on the second operation;
Control the movable platform to change a component of the velocity vector along another axis based on the third operation;
Or used to:
   Control the movable platform to change the nose direction of the movable platform based on the first operation;
   Control the movable platform to change a component of the velocity vector along one axis based on the second operation;
   Control the movable platform to change a component of the velocity vector along another axis based on the third operation.

In some embodiments, the control instruction may be used to:
Control the direction and/or magnitude of the movement velocity along one of the axes in the body coordinate system of the movable platform according to the first operation;
Control the movable platform to change the nose direction of the movable platform according to the second operation;
Control the movable platform to change the direction of movement velocity and/or the magnitude of movement velocity along one of the axes in the body coordinate system of the movable platform according to the third operation.

In some embodiments, the control instruction may be used to:
Control the magnitude of the movement velocity in the up/down and/or left/right directions of the movable platform's body coordinate system according to the first operation;
Control the movable platform to change the nose direction of the movable platform according to the second operation;
Control the movable platform to change the magnitude of the movement velocity along the nose direction according to the third operation.

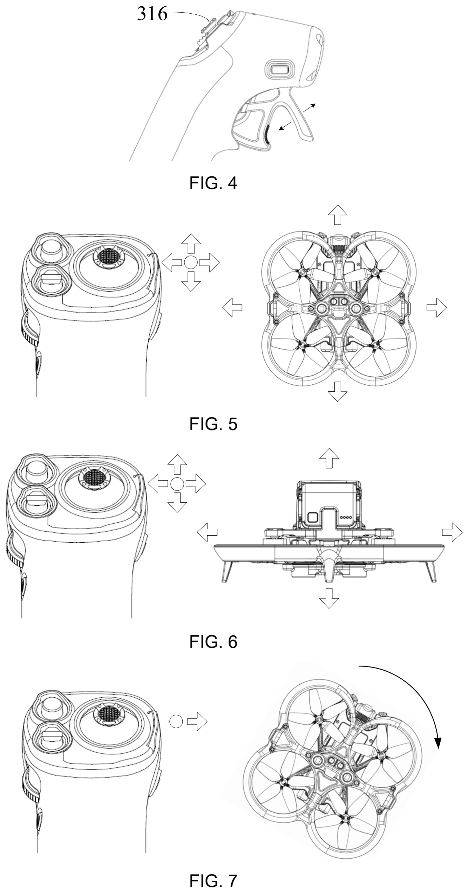

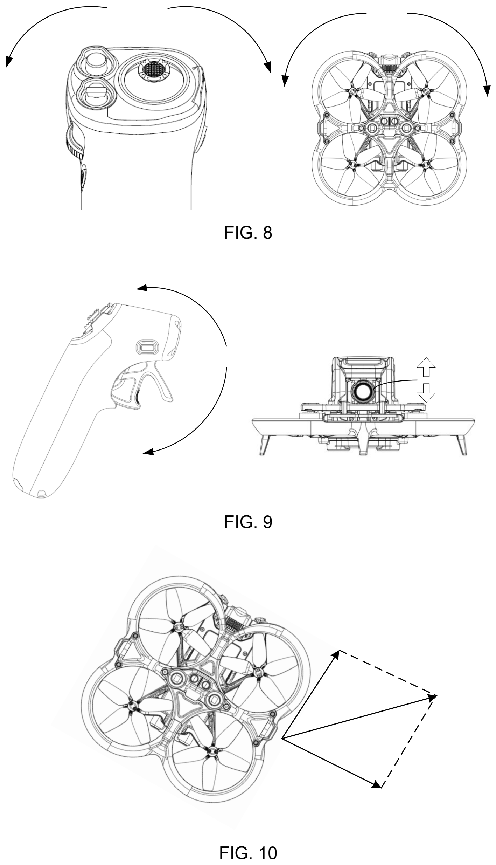

As shown in FIG. 6, 8, 9, and 10, in some embodiments, the motion-sensing controller may comprise a joystick and a trigger. The X-axis of the joystick is used to control the left/right direction of the movable platform in the body coordinate system, and the Y-axis of the joystick is used to control the up/down direction of the movable platform in the body coordinate system; the motion-sensing attitude along the roll axis or yaw axis of the motion-sensing controller is used to control the nose direction of the movable platform, and the motion-sensing attitude along the pitch axis of the motion-sensing controller is used to control the attitude of the photographing/imaging device mounted on the movable platform along the pitch axis; when the trigger of the motion-sensing controller is pulled inward, it controls the velocity and/or acceleration of the movable platform along the nose direction, and when pulled outward, it controls the velocity and/or acceleration of the movable platform in a direction opposite to the nose direction. In this way, when a user wants to make the nose direction of the movable platform form an angle greater than 0° with the motion, they can pull the trigger inward while changing the position of the joystick along the X-axis, so that the movable platform can generate horizontal velocity components in the nose direction and the right direction of the body coordinate system as shown in FIG. 10. As a result, the final synthesized velocity vector can form an angle between the direction of the horizontal plane and the nose direction, enhancing the degree of freedom for the user when controlling the movable platform using the motion-sensing controller.

For the joystick and motion-sensing attitude, they can have control variables in two or more dimensions, while the trigger can control relatively fewer dimensions. Therefore, the trigger can be used to control the velocity vector magnitude of the movable platform, achieving the effect of "throttle" acceleration or deceleration, making it easier for the user to understand and operate. Of course, in some embodiments, the third operation can also be used to control the nose direction or velocity vector direction of the movable platform, etc., which will not be listed in detail herein.

As shown in FIG. 4, the trigger of the motion-sensing controller can move along a first direction or a second direction. The user can perform acceleration, deceleration, forward flight, and backward flight operations on the movable platform by pushing and pulling the trigger.

In some embodiments, when the third operation is used to control the movable platform to change the velocity vector magnitude, the control instruction is also used to:
When the trigger moves along the first direction, control the movable platform to generate velocity and/or acceleration along the target direction;
When the trigger moves along the second direction, control the movable platform to generate velocity and/or acceleration in the direction opposite to a target direction.

The target direction can be the velocity vector direction, or the nose direction of the movable platform, or a direction associated with the first operation or the second operation.

For example, in some embodiments, a user can perform push and pull operations on the trigger to cause the movable platform to generate corresponding velocity in a target direction or in the direction opposite to the target direction. For instance, during the process of pulling the trigger inward, the movable platform generates the velocity along the target direction; during the process of pushing the trigger outward, the movable platform generates velocity in the direction opposite to the target direction; and when the trigger returns to a neutral position, the velocity of the movable platform may be 0, i.e., it remains hovering. In some embodiments, a user can perform push and pull operations on the trigger to accelerate or decelerate based on the target direction, meaning generating corresponding acceleration in the target direction or in the opposite direction of the target direction. It should be understood that when the movable platform decelerates to 0, the acceleration can be controlled to return to zero, allowing the movable platform to remain in a hovering state; of course, acceleration can also continue to be generated, causing the movable platform to move in the opposite direction of the target direction. It should be understood that when the trigger position remains stationary, if the trigger controls the velocity, the magnitude of the velocity can remain unchanged; if the trigger controls the acceleration, the magnitude of the acceleration can remain unchanged.

In some embodiments, the user can also generate new velocity and/or acceleration based on the nose direction of the movable platform through push-pull operations of the trigger. That is, if there is an offset between the current velocity vector of the movable platform and the nose direction, the generated velocity and/or acceleration can be superimposed on the movable platform to change its current movement direction.

In some embodiments, the target direction can also be determined by the first operation and/or the second operation. For example, when the first operation or the second operation is used to control the direction of a component of the velocity vector of the movable platform, that direction can also serve as the target direction.

Specifically, when the nose direction of the movable platform changes, the target direction can also change accordingly. For example, when a user changes the nose direction of the movable platform through the first operation or the second operation, the target direction can follow the nose direction. The user can control the velocity along the target direction by a third operation, namely by manipulating the trigger. That is, when the nose direction of the movable platform is as shown in FIG. 3, if the trigger is pulled without any other control operations, the movable platform will move in the direction of the nose direction.

Optionally, one of the first operation and the second operation can be used at least to control the movable platform to change its nose direction, and the other can be used at least to control the movable platform to change its velocity vector.

In some embodiments, the first operation can change the velocity vector while changing the nose direction. In some embodiments, the first operation can comprise two sub-operations. One sub-operation is used to change the nose direction, while the other sub-operation is used to change the velocity vector. In some embodiments, the first operation may only be used to change the nose direction, while the second operation may only be used to change the velocity vector. The same applies to the second operation. Specifically, to facilitate user control, the nose direction and velocity vector of the movable platform can be controlled separately by the first operation and the second operation, achieving decoupled control of the nose direction and velocity vector of the movable platform by the motion-sensing controller.

Optionally, when the motion-sensing controller comprises a joystick, a user can control the nose direction and/or velocity vector of the movable platform by operating the joystick.

In some embodiments, the control instruction can be used to perform at least one of the following:
Control the movable platform to change the velocity vector based on the joystick's stick control input and/or changes in the stick control input;
Control the movable platform to change the nose direction based on the joystick's stick control input and/or changes in the stick control input.

Optionally, a user can also change the attitude of the photographing device mounted on the movable platform by operating the joystick.

In some embodiments, the control instruction can also be used to:
Control the movable platform to change the attitude of a mounted photographing device based on the joystick's stick control input and/or changes in the stick control input.

The control instruction can be generated based on the joystick's stick control input, the change in the stick control input, or a combination of both, which is not limited herein. For example, the positive or negative value of the joystick's stick control input can correspond to the direction of velocity, while the magnitude of the stick control input can correspond to the velocity magnitude. It should be understood that the joystick can have multiple axial stick control inputs, and these inputs can be synthesized within a plane to facilitate control, such as combining stick control inputs along the X-axis, Y-axis, and Z-axis. For example, in an XOY plane, when the joystick is pushed in a direction that is not parallel to either the X-axis or the Y-axis, the joystick can be considered to have stick control inputs along both the X-axis and the Y-axis simultaneously.

Optionally, since the joystick can have two or more axial synthesized stick control inputs, it is possible to control different parameters of the movable platform by operating the joystick along different axes.

In some embodiments, the joystick's stick control input can comprise a stick control input along a first axis and a stick control input along a second axis, where the first axis and the second axis are not parallel to each other.

In some embodiments, based on the stick control input of the joystick and/or changes in the stick control input, the controllable movable platform changes the velocity vector, which may comprise at least one of the following:
Based on the stick control input of the joystick along the first axis and/or changes in the stick control input, controlling the movable platform to change the direction and/or
magnitude of the velocity vector component along a third axis;
Based on the stick control input of the joystick along the second axis and/or changes in the stick control input, controlling the movable platform to change the direction and/or magnitude of the velocity vector component along a fourth axis;
Based on the stick control input of the joystick along the second axis and/or changes in the stick control input, controlling the movable platform to change the direction and/or magnitude of the velocity vector component along a fifth axis;
where the third axis and the fourth axis lie in the same plane and are not parallel to each other, and the fifth axis is perpendicular to the plane containing the third and fourth axes.

Furthermore, to facilitate user understanding and control, the third axis and the fourth axis can correspond to the left-right direction and the front-back direction, respectively, in the body coordinate system of the movable platform, while the fifth axis can correspond to the up-down direction in the body coordinate system of the movable platform.

As shown in FIG. 5-6, in FIG. 5, the first axis can be the X-axis of the joystick, and the second axis can be the Y-axis of the joystick. When the joystick moves in the positive direction along the X-axis, the control instruction can be used to control the movable platform to change the velocity vector to move to the right in the body coordinate system; when the joystick moves in the negative direction along the X-axis, the control instruction can be used to control the movable platform to change the velocity vector to move to the left in the body coordinate system; when the joystick moves in the positive direction along the Y-axis, the control instruction can be used to control the movable platform to change the velocity vector to move forward in the body coordinate system; when the joystick moves in the negative direction along the Y-axis, the control instruction can be used to control the movable platform to change the velocity vector to move backward in the body coordinate system. Alternatively, as shown in FIG. 6, when the joystick moves along the Y-axis, the control instruction can be used to control the movable platform to change the velocity vector to move up or down in the body coordinate system. In other optional embodiments, the first axis and the second axis of the joystick can also be used to control other motion parameters.

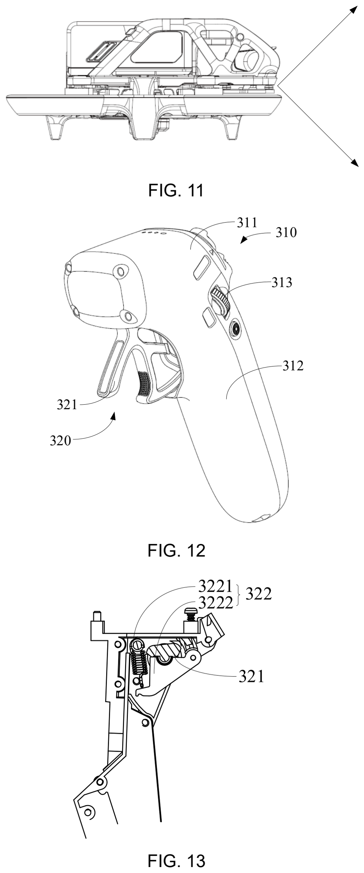

In some embodiments, to facilitate landing control, a user can control the movable platform based on the photographing frame coordinate system. In some embodiments, the third axis and the fourth axis can correspond to the left-right direction and the front-back direction, respectively, in t photographing frame coordinate system of the photographing device carried by the movable platform, while the fifth axis corresponds to the up-down direction in the photographing frame coordinate system of the photographing device carried by the movable platform. As shown in FIG. 11, if the photographing device carried by the movable platform is oriented in the direction of an arrow pointing 45° downward, the upper part of the photographing frame coordinate system of the photographing device can correspond to the direction of an arrow pointing 45° upward.

Optionally, the control instruction can be used to control the movable platform to perform different operations when the movable platform is in different states.

In some embodiments, the method may further comprise:
Controlling the movable platform based on a first control strategy when the movable platform is in a flight state;
Controlling the movable platform based on a second control strategy when the movable platform is in a landing state; where the first control strategy controls the movable platform based on the body coordinate system of the movable platform, and the second control strategy controls the movable platform based on photographing frame coordinate system of the photographing device carried by the movable platform. The first control strategy and the second control strategy can control the velocity vector of the movable platform based on different reference coordinate systems. The specific implementation can refer to the descriptions of the above embodiments, which will not be repeated herein.

In some embodiments, based on the stick control input of the joystick and/or changes in the stick control input, the controlling of the movable platform to change the nose direction may comprise:
Based on the stick control input of the joystick along the first axis or the second axis and/or changes in the stick control input, controlling the movable platform to change the nose direction in a clockwise or counterclockwise direction.

For example, as shown in FIG. 7, when the joystick moves in the positive direction along the X-axis, the control instruction can be used to control the movable platform to rotate clockwise along the yaw axis. When the joystick moves in the negative direction along the X-axis, the control instruction can be used to control the movable platform to rotate counterclockwise, which can be set according to the actual application scenario.

Accordingly, the motion-sensing attitude of the motion-sensing controller can also comprise attitudes along multiple axes, and the attitudes along multiple axes can achieve control of different motion parameters for different movable platforms.

In some embodiments, the motion-sensing attitude of the motion-sensing controller may comprise at least one of the following:
The motion-sensing attitude along the yaw axis; the motion-sensing attitude along the pitch axis; the motion-sensing attitude along the roll axis.

In some embodiments, the control instruction can be used to:
Control the movable platform to change the nose direction and/or velocity vector based on the motion-sensing attitude of the motion-sensing controller and/or changes in the motion-sensing attitude.

In some embodiments, when the motion-sensing attitude is used to control the movable platform to change the velocity vector, the control instruction can be used to perform at least one of the following:
Based on the motion-sensing attitude of the motion-sensing controller along the yaw or roll axis and/or changes in the motion-sensing attitude, control the movable platform to change the direction and/or magnitude of the velocity vector component along the third axis;
Based on the motion-sensing attitude of the motion-sensing controller along the yaw or roll axis and/or changes in the motion-sensing attitude, control the movable platform to change the direction and/or magnitude of the velocity vector component along the fourth axis; or
Based on the motion-sensing attitude of the motion-sensing controller along the pitch axis and/or changes in the motion-sensing attitude, control the movable platform to change the direction and/or magnitude of the velocity vector component along the fifth axis;
Where the third axis and the fourth axis lie in the same plane and are not parallel to each other, and the fifth axis is perpendicular to the plane containing the third and fourth axes.

The third axis, fourth axis, and fifth axis are similar to those described in the above embodiments, and to avoid repetition, they will not be elaborated herein. It should be understood that when the motion-sensing attitude of the motion-sensing controller along the yaw axis and/or changes in the motion-sensing attitude are used to control the movable platform to change the direction and/or magnitude of the velocity vector component along the third axis, the motion-sensing attitude of the motion-sensing controller along the roll axis and/or changes in the motion-sensing attitude can likewise be used to control the movable platform to change the direction and/or magnitude of the velocity vector component along the third axis, without limitation.

In some embodiments, when the motion-sensing attitude is used to control the movable platform to change the nose direction, the control instruction is used to perform:
Based on the motion-sensing attitude of the motion-sensing controller along one of the yaw, roll, or pitch axes and/or changes in the motion-sensing attitude, controlling the movable platform to change the nose direction in a clockwise or counterclockwise direction.

As shown in FIG. 8, when the motion-sensing controller changes the motion-sensing attitude along the yaw axis, the movable platform can also change the nose direction in a clockwise or counterclockwise direction.

Similarly to the above embodiments, the motion-sensing attitude can also be used to control the attitude of the photographing device carried by the movable platform. In some embodiments, the control instruction can also be used to:
Based on the motion-sensing attitude of the motion-sensing controller along the pitch axis and/or changes in the motion-sensing attitude, control the movable platform to change the attitude of the photographing device carried by the movable platform along the pitch axis.

For example, as shown in FIG. 9, if the motion-sensing controller "tilts up" along the pitch axis, the effect of the control instruction is to control the photographing device to "tilt up" along the pitch axis; if the motion-sensing controller "tilts down" along the pitch axis, the effect of the control instruction is to control the photographing device to "tilt down" along the pitch axis. By using changes in the motion-sensing attitude of the motion-sensing controller along the pitch axis and/or changes in the motion-sensing attitude, the attitude of the photographing device along the pitch axis can be controlled. Such an operation makes it easier for users to understand and adapt to their operating habits, thereby improving the user experience.

Optionally, as shown in FIG. 11, the motion-sensing controller may also comprise a scroll wheel, and the user can control the movable platform by operating the scroll wheel.

In some embodiments, the method may further comprise:
Receiving a fourth operation from the user on the scroll wheel; the control instruction is also used to:
Control the photographing parameters of the photographing device carried by the movable platform based on the fourth operation.

In some embodiments, the scroll wheel, while capable of sliding, can also move upon being pressed, and according to the fourth operation, control the photographing device mounted on the movable platform, which may specifically comprise at least one of the following:
Based on a sliding operation of the scroll wheel, controlling the photographing device to adjust photographing parameters;
Based on a short press operation of the scroll wheel, confirming the photographing parameters; or
Based on a long press operation of the scroll wheel, cancelling the control of the photographing device to adjust photographing parameters;
Where the scroll wheel can be connected to the housing of the motion-sensing controller by a rotating connector, allowing the scroll wheel to move relative to the housing when pressed. Additionally, the motion-sensing controller can be correspondingly equipped with a pressure sensor, which is triggered when the scroll wheel moves under pressure, thereby enabling the motion-sensing controller to generate corresponding control instructions.

The photographing parameters may comprise the attitude of the photographing device, as well as the optical parameters of the photographing device, which are not limited herein. For example, a user can control the pitching rotation of the photographing device along the pitch axis through the sliding operation of the scroll wheel; the user can also control the focal length, aperture size, etc., of the photographing device through the sliding operation of the scroll wheel.

Of course, in other optional embodiments, the fourth operation can also be used to control interactive menu options in another control device (such as a mobile device or wearable device). The control device is in communication with the movable platform, and by controlling the interactive menu options of the other control device, the control of the movable platform is achieved, which is not limited herein.

As shown in FIG. 12 to 18, embodiments of the present application further provide a motion-sensing controller 300, comprising:
a housing 310; and
a trigger assembly 320 connected to the housing 310. The trigger assembly 320 comprises a trigger 321 and a reset member 322. The trigger 321 is connected to the reset member 322 and can move relative to the housing 310. The reset member 322 provides a resetting force that positions the trigger 321 at a target position. The trigger 321 can be subjected to the resetting force provided by the reset member 322 during its movement along the first direction or the second direction from the target position.

The motion-sensing controller can be used to control a movable platform. During the movement of the trigger 321 along the first direction, the motion-sensing controller is capable of controlling the movable platform to generate velocity and/or acceleration along the target direction; during the movement of the trigger 321 along the second direction, the motion-sensing controller is capable of controlling the movable platform to generate velocity and/or acceleration in the direction opposite to the target direction.

In this way, when using the motion-sensing controller, a user can toggle the trigger in two directions, achieving forward and reverse movement of the movable platform along the target direction, thereby enhancing the control freedom of the user when using the motion-sensing controller to control the movable platform.

As shown in FIG. 12, the housing 310 of the motion-sensing controller can be roughly in an "inverted L" shape. The bottom of the housing can be a grip part 312 for the user to hold. The upper part of the housing can be a control part 311, equipped with multiple function buttons. The trigger assembly 320 can be positioned at the junction of the grip part 312 and the control part 311, making it easier for the user to simultaneously use the trigger assembly 320 and the function buttons on the control part 311 while holding the controller.

The trigger 321 of the trigger assembly 320 can move relative to the housing 310. Specifically, the trigger 321 of the trigger assembly 320 can be rotationally connected or slidably connected to the housing 310, etc., which can be set according to the actual needs. The target position can be the initial position of the trigger 321, or in other words, the position where the trigger 321 is located when no external force is applied.

Optionally, since it is easier for the user to pull the trigger 321 toward the grip part 312 when holding the motion-sensing controller, and more difficult to push the trigger 321 away from the grip part 312, the force required for the trigger 321 to move in both directions along the same stroke can be different, in order to make it more convenient for the user to toggle the trigger 321 in both directions.

In some embodiments, the housing 310 can comprise a grip part 312. When the movement stroke is the same, the resetting force provided by the reset member 322 for the trigger 321 during its movement along the first direction from the target position is greater than the resetting force provided by the reset member 322 for the trigger 321 during its movement along the second direction from the target position. The first direction is the direction in which the trigger 321 moves toward the grip part 312, and the second direction is the direction in which the trigger 321 moves away from the grip part 312.

In this way, when the movement stroke is the same, the force required for the user to push the trigger 321 away from the grip part 312 is smaller than the force required to pull the trigger 321 toward the grip part 312. This operation makes it easier for the user to push the trigger 321 in the reverse direction, enhancing the user's experience.

Furthermore, the resetting force in two directions for the trigger 321 can be provided by the cooperation of an elastic component 3221 and a linkage component 3222.

In some embodiments, the resetting component can comprise the elastic component 3221 and the linkage component 3222. One end of the elastic component 3221 is fixedly connected to the housing 310, while the other end thereof is connected to the linkage component 3222. One end of the linkage component 3222 is rotatably connected to the housing 310, and the other end is connected to the elastic component 3221.

The trigger 321 is rotatably connected to the housing 310, and the trigger 321 is connected to the linkage component 3222. During the rotation of the trigger 321 from the target position along the first direction and from the target position along the second direction, the trigger 321 drives the linkage component 3222 to move in the direction away from the elastic component 3221, along the end connected to the elastic component 3221.

Additionally, the trigger 321 can be connected to the housing 310 via a rotational connection, so that the trigger 321 can rotate along a first shaft 32111 in both the first and second directions.

Furthermore, the trigger 321 can be connected to the housing 310 through a rotational connection, allowing the trigger 321 to rotate along the first shaft 32111 in both the first and second directions.

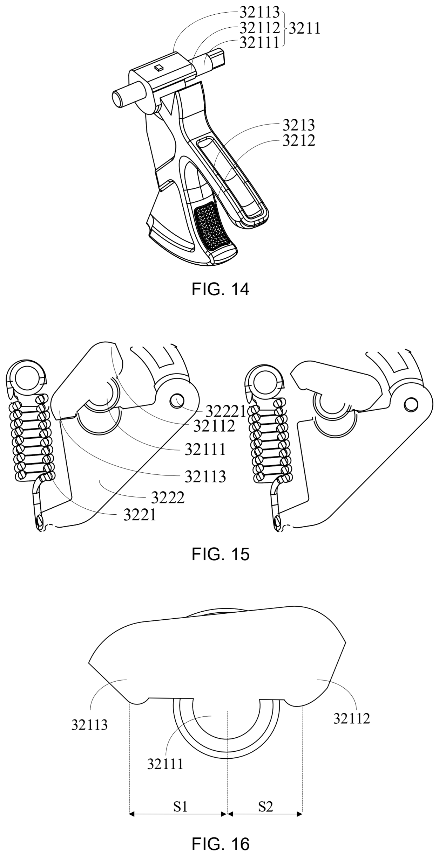

As shown in FIG. 14, in some embodiments, the trigger 321 can comprise a rotating component 3211. The rotating component 3211 comprises the first shaft 32111, a first protrusion 32112, and a second protrusion 32113. The first shaft 32111 is rotatably connected to the housing 310. The first protrusion 32112 and the second protrusion 32113 are respectively connected to both sides of the first shaft 32111 and extend in different directions.

The linkage component 3222 is rotatably connected to the housing 310. The linkage component 3222 is respectively abutted against the first protrusion 32112 and the second protrusion 32113. During the rotation of the rotating component 3211 along the first shaft 32111, either the first protrusion 32112 or the second protrusion 32113 drives the linkage component 3222 to rotate in the direction away from the elastic component 3221, along the end connected to the elastic component 3221.

In some embodiments, a rotating groove (slot) can be provided between the two ends of the linkage component 3222, and the first shaft 32111 can be at least partially located within the rotating groove; the first protrusion 32112 and the second protrusion 32113 are respectively located on both sides of the rotating groove.

In some embodiments, the elastic component 3221 can be a telescoping spring. One end of the telescoping spring is fixedly connected to the housing 310, and the other end is fixedly connected to the linkage component 3222.

As shown in FIG. 13-15, in some embodiments, the elastic component 3221 can be a compression spring. The first shaft 32111 of the trigger 321 and the first protrusion 32112, second protrusion 32113 can be arranged in a substantially T-shape. A rotating groove for partially accommodating the first shaft 32111 can be provided on the linkage component 3222. The rotating groove can be located in the middle of the linkage component 3222, that is, between the shafting end of the linkage component 3222 and the end where the linkage component 3222 is connected to the elastic component 3221.

As shown in FIG. 15, during the rotation of the trigger 321 along the first shaft 32111 in the first direction, the first protrusion 32112 rotates in the first direction, driving the linkage component 3222 to move away from the elastic component 3221, causing the elastic component 3221 to stretch and generate a reverse resetting force, so that the trigger 321 can automatically return to the target position. Similarly, during the rotation of the trigger 321 along the first shaft 32111 in the second direction, the second protrusion 32113 rotates in the second direction, driving the linkage component 3222 to move away from the elastic component 3221, causing the elastic component 3221 to stretch and generate a reverse resetting force, so that the trigger 321 can automatically return to the target position.
Through the cooperation of the elastic component 3221 and the linkage component 3222, the trigger 321 can automatically return toward the center when moving in either direction.

Furthermore, as shown in FIG. 16, in order to achieve the condition where the force required for the user to push the trigger 321 away from the grip part 312 is smaller than the force required to pull the trigger 321 toward the grip part 312, in some embodiments, the distance S1 from the end of the second protrusion 32113, which is away from the first shaft 32111, to the first shaft 32111 is greater than the distance S2 from the end of the first protrusion 32112, which is away from the first shaft 32111, to the first shaft 32111.

In this way, during the toggling of the trigger 321, the second protrusion 32113 and the first protrusion 32112 need to abut against the linkage component 3222 and drive the linkage component 3222 to move. Since the distance from the first protrusion 32112 to the first shaft 32111 is longer, the moment arm (lever arm) is also longer. When the required torque is the same, the force needed for the second protrusion 32113 to rotate in the second direction is smaller than the force needed for the first protrusion 32112 to rotate in the first direction. As a result, the user can move the trigger 321 in the second direction with a smaller force. This operation adapts to the user's natural force application habits, enhancing the user's experience.

As shown in FIG. 15, in some embodiments, the linkage component 3222 can comprise a second shaft 32221. The linkage component 3222 is rotatably connected to the housing 310 via the second shaft 32221; the distance from the end of the second protrusion 32113, away from the first shaft 32111, to the second shaft 32221 is greater than the distance from the end of the first protrusion 32112, away from the first shaft 32111, to the second shaft 32221. Similarly, the distance from the second protrusion 32113 to the second shaft 32221 is longer. During the toggling of the trigger 321, the second protrusion 32113 and the first protrusion 32112 need to abut against the linkage component 3222 and drive the linkage component 3222 to move. Therefore, when the required torque is the same, the force needed for the second protrusion 32113 to rotate in the second direction is smaller than the force needed for the first protrusion 32112 to rotate in the first direction. As a result, the user can move the trigger 321 in the second direction with a smaller force. This operation adapts to the user's natural force application habits, enhancing the user's experience.

In some embodiments, the rotating component 3211 can be located within the housing 310.

In some embodiments, the resetting member 322 can be located within the housing 310.

In some embodiments, the trigger 321 can comprise a first force application part 3212 and a second force application part 3213. The first force application part 3212 and the second force application part 3213 are located outside the housing 310. The first force application part 3212, when subjected to a force along the first direction, drives the trigger 321 to rotate along the first direction; the second force application part 3213, when subjected to a force along the second direction, drives the trigger 321 to rotate along the second direction.

In some embodiments, a side of the first force application part 3212 and a side of the second force application part 3213 enclose to form a receiving groove.

As shown in FIG. 14, the first force application part 3212 and the second force application part 3213 are arranged in a generally V-shape, so that the user can place their finger into the V-shaped notch and apply force inward or outward to make the trigger 321 move in the first or second direction. By providing the first force application part 3212 and the second force application part 3213, it becomes easier for the user to apply force in both directions, further enhancing the user's experience.

Additionally, since users' finger sizes vary, in order to make the receiving groove better fit the user's finger and facilitate force application, the size of the receiving groove can be adjusted.

In some embodiments, the first force application part 3212 can be rotatably connected to the second force application part 3213, so that the size of the receiving groove can change.

Furthermore, the trigger 321 can also comprise a fastener. When the fastener is in a first state, the first force application part 3212 and the second force application part 3213 are fixed; when the fastener is in a second state, the first force application part 3212 and the second force application part 3213 can rotate relative to each other.

The first force application part 3212 and the second force application part 3213 can be fastened by a bolt while being rotatably connected. The first state can be the state where the bolt is tightened, and the second state can be the state where the bolt is loosened. A user can adjust the spacing between the first force application part 3212 and the second force application part 3213 when the fastener is in the second state and then fix the first force application part 3212 and the second force application part 3213 with the fastener. This operation allows the receiving groove between the first force application part 3212 and the second force application part 3213 to be adjusted, enhancing the user's experience.

Of course, in other optional embodiments, the trigger 321 can also be partially ring-shaped, allowing the user to place their finger into the ring, and the specific design can be adjusted based on the actual situation.

In some embodiments, the motion-sensing controller can also comprise a thumbwheel assembly 313. The thumbwheel assembly 313 is connected to the housing 310 and is at least partially located outside the housing 310.

The thumbwheel assembly 313 comprises a thumbwheel 3131 and a connector 3132. The thumbwheel 3131 is rotatably connected to the connector 3132 and can rotate relative to the connector 3132 along a center axis thereof. The connector 3132 is movably connected to the housing 310, and the connector 3132 can move relative to the housing 310 to drive the thumbwheel 3131 to move.

The thumbwheel 3131 of the thumbwheel assembly 313 can not only rotate relative to the connector 3132 along its center axis, i.e., the user can perform control operations by rotating the thumbwheel 3131; meanwhile, since the connector 3132 is movably connected to the housing 310, the thumbwheel 3131 can also move relative to the housing 310 through the movement of the connector 3132. This allows the user to perform other control operations by pressing the thumbwheel 3131.

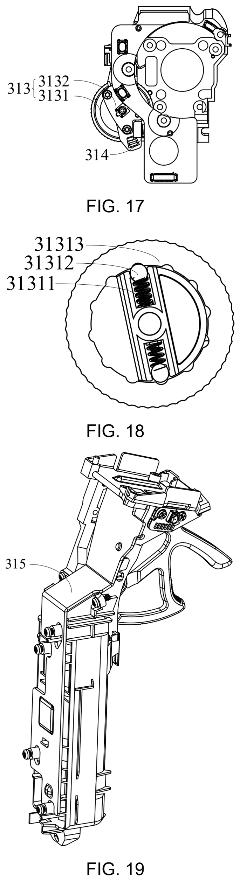

As shown in FIG. 17, in some embodiments, the thumbwheel 3131 can be rotatably connected to the connector 3132 through a center shaft, and the connector 3132 can be rotatably connected to the housing 310, so that the thumbwheel 3131 can rotate together with the connector 3132. A pressure sensor may also be provided within the housing 310. During the rotation of the thumbwheel 3131 into the housing 310, it comes into contact with the pressure sensor, thereby generating a corresponding electrical signal. In this way, a user can perform control operations by rotating the thumbwheel 3131 while also performing other control operations by pressing the thumbwheel 3131. By using the control component 311 in various ways, the richness of the control function and space utilization are improved.

Referring to the above method embodiments, a user can control the photographing parameters of the photographing device by rotating the thumbwheel 3131, while determining or canceling the photographing parameters by pressing the thumbwheel 3131. The specific settings can be made according to actual needs and are not limited herein.

Furthermore, as shown in FI 18, in order to provide rotational damping feel during the rotation of the thumbwheel 3131 around the center shaft, the thumbwheel 3131 can comprise an elastic component 31311, a limiting component 31312, and a dial ring 31313. The inner wall of the dial ring 31313 can have multiple limiting grooves. The limiting component 31312 can be spherical in shape. The limiting grooves can correspond to semi-circular grooves. The limiting component 31312 is in contact with the inner wall of the dial ring 31313 under the action of the elastic component 31311. When rotating the thumbwheel 3131, the limiting component 31312 can be at least partially located in the limiting grooves, thereby generating corresponding damping when it disengages from the limiting grooves, improving the tactile feel during operation.

Optionally, the motion-sensing controller can also comprise a heat dissipation component 315, which can be located within the housing 310 to dissipate heat from the circuit board(s) in the motion-sensing controller.

Furthermore, as shown in FIG. 19, the heat dissipation component 315 can be adapted to the shape of the housing 310 of the motion-sensing controller, with a bent part in the middle. The heat dissipation component 315 can be attached and fixed to the circuit boards at both the upper and lower parts of the motion-sensing controller. By using an integrated heat dissipation component 315, heat dissipation is achieved, facilitating the processing and installation of the heat dissipation component 315, and also effectively improving the heat dissipation efficiency by increasing the heat dissipation area.

Optionally, as shown in FIG. 4, the motion-sensing controller can also comprise a joystick 316. The joystick 316 can be partially located outside the housing 310. The joystick 316 can be used to implement the control method as described in the above embodiments, or it can be used to implement other control methods, which are not listed herein.

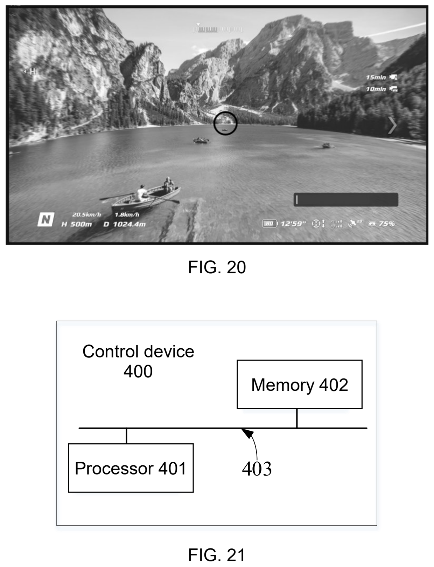

Some embodiments of this application also provide a control method, which can be applied to a wearable device. The wearable device comprises a display device, which can be used to display the first-person perspective (First Person View, FPV) screen during motion. As shown in FIG. 20, the method may comprise: while the display device is displaying the FPV screen, it also displays an indicator icon (the circled portion in the figure). The indicator icon can be used to indicate the current motion of the movable platform or to indicate the current velocity vector direction. Additionally, as shown at the top of FIG. 20, the display device can also display an indicator bar, which is used to indicate the offset between the current velocity vector direction and the nose direction.

It should be understood that when the angle between the movable platform's nose direction and its motion is greater than 0°, the photographing device of the movable platform can change along with the nose direction of the movable platform. Therefore, the velocity vector direction indicated by the indicator icon may exceed the displayed FPV screen. In some embodiments, the maximum angle between the nose direction of the movable platform and the velocity vector can be limited to prevent the velocity vector direction indicated by the indicator icon from exceeding the displayed FPV screen. In some embodiments, when the velocity vector direction indicated by the indicator icon exceeds the displayed FPV screen, it can be shown at the edge of the FPV screen.

FIG. 21 is a structural schematic block diagram of a control device provided by the embodiments of this application. The control device is applied to the aforementioned movable platform 100, where the control device can be integrated into the movable platform 100 or be independently set and communicatively connected with the movable platform 100. The aforementioned control method can also be applied to this control device.

As shown in FIG. 20, the control device 400 comprises a processor 401 and a memory 402, with the processor 401 and memory 402 connected through a bus 403. The bus 403 can be, for example, an I2C (Inter-integrated Circuit) bus.

Specifically, the processor 401 can be a microcontroller unit (MCU), a center processing unit (CPU), or a digital signal processor (DSP), etc.

Specifically, the memory 402 can be a Flash chip, a read-only memory (ROM) disk, a CD, a USB flash drive, or a mobile hard drive, etc.

The processor 401 is used to execute the computer program(s) stored in the memory 402 and, while executing the computer program(s), perform the following steps:
Receiving a first operation and a second operation input by a user, where the first operation and second operation are operations on different objects of a motion-sensing controller, and one of the first operation and second operation is a motion-sensing control operation of the motion-sensing controller;
In response to the first and second operations, generating a control instruction(s) to control a movable platform, so that an angle between a nose direction of the movable platform and a horizontal component of a velocity vector of the movable platform is greater than 0°.

At the same time, it can also be used to implement the steps in the aforementioned method embodiment. To avoid repetition, this will not be elaborated further herein.

It should be noted that a person skilled in the art will clearly understand that, for convenience and simplicity in description, the specific working process of the control device described above can refer to the corresponding process in the aforementioned control method embodiment, and will not be repeated herein.

Some embodiments of this application also provide a computer-readable storage medium, which stores a computer program. The computer program comprises program instructions that, when executed by a processor, implement the steps of the control method provided in the aforementioned embodiment.

The computer-readable storage medium can be any internal storage unit of the movable platform as described in the previous embodiments, such as the movable platform's hard disk or memory. The computer-readable storage medium can also be an external storage device of the movable platform, such as a plug-in hard drive equipped on the movable platform, a Smart Media Card (SMC), a Secure Digital (SD) card, a Flash Card, etc.

It should be understood that the terms used in this application are for the purpose of describing specific embodiments and are not intended to limit the application. As used in this application and the attached claims, unless the context clearly indicates otherwise, the singular forms "a," "an," and "the" are intended to comprise the plural forms.

It should also be understood that the term "and/or" used in this application and the attached claims refers to any combination of the listed items, including all possible combinations.

The above is only a specific embodiment of the application, but the scope of the application is not limited to this. Any skilled person in the art, within the technical scope disclosed in this application, could easily think of various equivalent modifications or substitutions, and these modifications or substitutions should be comprised within the scope of the application. Therefore, the scope of the application should be determined by the scope of the claims.

## Claims

1. A motion-sensing control method for a movable platform, **characterized by** comprising:
receiving a first operation and a second operation input by a user, wherein the first operation and the second operation are operations on different objects of a motion-sensing controller, and one of the first operation and the second operation is a motion-sensing control operation of the motion-sensing controller; and
in response to the first operation and the second operation, generating a control instruction, wherein the control instruction is used to control the movable platform, and the control instruction causes an angle greater than 0° to be formed between a nose direction of the movable platform and a horizontal component direction of a movement velocity of the movable platform.

2. The method according to claim 1, **characterized in that** the first operation and the second operation are operations on different components in the motion-sensing controller.

3. The method according to claim 1, **characterized in that** the first operation and the second operation are operations targeting different physical elements of a same component in the motion-sensing controller.

4. The method according to claim 1, **characterized in that** one of the first operation and the second operation is at least configured to control the movable platform to change the nose direction of the movable platform, and the other is at least configured to control the movable platform to change a velocity vector.

5. The method according to claim 2, **characterized in that** the motion-sensing controller comprises a joystick, the first operation is an operation to change a stick control input of the joystick, and the second operation is an operation to change a motion-sensing attitude of the motion-sensing controller.

6. The method according to any of claims 1-5, **characterized in that** the motion-sensing controller further comprises a trigger, and the method further comprises:
receiving a third operation from the user on the trigger; and the generating of the control instruction comprises:
generating the control instruction based on the first operation, second operation and third operation, wherein
one of the first operation, second operation and third operation is at least configured to control the movable platform to change a velocity vector direction, one is at least configured to control the movable platform to change a velocity vector magnitude, and another one is at least configured to control the movable platform to change the nose direction.

7. The method according to claim 6, **characterized in that** the control instruction is configured to:
control, based on the first operation, the movable platform to change a component of the velocity vector along an axis;
control, based on the second operation, the movable platform to change the nose direction of the movable platform;
control, based on the third operation, the movable platform to change a component of the velocity vector along another axis;
or configured to:
control, based on the first operation, the movable platform to change the nose direction of the movable platform;
control, based on the second operation, the movable platform to change a component of the velocity vector along an axis;
control, based on the third operation, the movable platform to change a component of the velocity vector along another axis.

8. The method according to claim 6, **characterized in that**, when the third operation is configured to control the movable platform to change the velocity vector magnitude, the control instruction is further configured to:
control, when the trigger moves in a first direction, the movable platform to generate velocity and/or acceleration along a target direction;
control, when the trigger moves in a second direction, the movable platform to generate velocity and/or acceleration along a direction opposite to the target direction.

9. The method according to claim 8, **characterized in that** the target direction is the nose direction of the movable platform, or the target direction is the velocity vector direction, or the target direction is associated with the first operation and/or the second operation.

10. The method according to claim 5, **characterized in that** the control instruction is configured to perform at least one of the following:
controlling, based on a stick control input and/or a change in the stick control input of the joystick, the movable platform to change the velocity vector;
controlling, based on a stick control input and/or a change in the stick control input of the joystick, the movable platform to change the nose direction.

11. The method according to claim 10, **characterized in that** the control instruction is further configured to:
control, based on the stick control input and/or the change in the stick control input of the joystick, the movable platform to change an attitude of a photographing device mounted on the movable platform.

12. The method according to claim 10 or 11, **characterized in that** the stick control input of the joystick comprises a stick control input along a first axis and a stick control input along a second axis, wherein the first axis and the second axis are not parallel to each other.

13. The method according to claim 12, **characterized in that** the controlling of the movable platform to change the velocity vector based on the stick control input and/or the change in the stick control input of the joystick comprises at least one of the following:
controlling, based on the stick control input and/or the change in the stick control input of the joystick along the first axis, the movable platform to change a direction and/or magnitude of a component of the velocity vector along a third axis;
controlling, based on the stick control input and/or the change in the stick control input of the joystick along the second axis, the movable platform to change a direction and/or magnitude of a component of the velocity vector along a fourth axis;
controlling, based on the stick control input and/or the change in the stick control input of the joystick along the second axis, the movable platform to change a direction and/or magnitude of a component of the velocity vector along a fifth axis, wherein
the third axis and the fourth axis lie in a same plane and are not parallel to each other, and the fifth axis is perpendicular to the plane formed by the third axis and the fourth axis.

14. The method according to claim 12, **characterized in that** the controlling of the movable platform to change the nose direction based on the stick control input and/or the change in the stick control input of the joystick comprises:
controlling the movable platform to change the nose direction in a clockwise or counterclockwise direction based on the stick control input and/or the change in the stick control input of the joystick along the first axis or the second axis.

15. The method according to claim 13, **characterized in that** the third axis and the fourth axis are a left-right direction and a front-back direction in a body coordinate system of the movable platform, respectively, and the fifth axis is an up-down direction in the body coordinate system of the movable platform.

16. The method according to claim 13, **characterized in that** the third axis and the fourth axis are a left-right direction and a front-back direction in a photographing frame coordinate system of the photographing device mounted on the movable platform, respectively, and the fifth axis is an up-down direction in the photographing frame coordinate system of the photographing device mounted on the movable platform.

17. The method according to claim 12, **characterized in that**, when the control instruction is configured to control the movable platform to change the attitude of the photographing device mounted thereon based on the change in the stick control input of the joystick along the first axis and/or the stick control input along the second axis, the control instruction is specifically configured to:
control the movable platform to change the attitude of the photographing device mounted thereon along a pitch axis, based on the change in the stick control input of the joystick along the first axis and/or the stick control input along the second axis,

18. The method according to claim 1, **characterized in that** the motion-sensing attitude of the motion-sensing controller comprises at least one of the following:
a motion-sensing attitude along a yaw axis, a motion-sensing attitude along a pitch axis, or a motion-sensing attitude along a roll axis.

19. The method according to claim 1 or 18, **characterized in that** the control instruction is configured to:
control the movable platform to change the nose direction and/or the velocity vector based on the motion-sensing attitude and/or a change in motion-sensing attitude of the motion-sensing controller.

20. The method according to claim 19, **characterized in that** the control instruction is configured to perform at least one of the following:
controlling the movable platform to change a direction and/or magnitude of a component of a velocity vector along a third axis based on the motion-sensing attitude and/or the change in motion-sensing attitude of the motion-sensing controller along a yaw or roll axis;
controlling the movable platform to change a direction and/or magnitude of a component of a velocity vector along a fourth axis based on the motion-sensing attitude and/or the change in motion-sensing attitude of the motion-sensing controller along a yaw or roll axis;
controlling the movable platform to change a direction and/or magnitude of a component of a velocity vector along a fifth axis based on the motion-sensing attitude and/or the change in motion-sensing attitude of the motion-sensing controller along a pitch axis, wherein
the third axis and the fourth axis are in a same plane and are not parallel to each other, and the fifth axis is perpendicular to the plane in which the third axis and the fourth axis are located.

21. The method according to claim 19, **characterized in that** the control instruction is configured to:
control the movable platform to change the nose direction clockwise or counterclockwise based on the motion-sensing attitude and/or the change in motion-sensing attitude of the motion-sensing controller along one of the yaw, roll, or pitch axes.

22. The method according to claim 19, **characterized in that** the control instruction is further configured to:
control the movable platform to change an attitude of a photographing device mounted thereon along a pitch axis based on the motion-sensing attitude and/or the change in motion-sensing attitude of the motion-sensing controller along the pitch axis.

23. The method according to claim 1, **characterized in that** the control instruction is configured to:
control the movable platform based on a first control strategy when the movable platform is in a flying state;
control the movable platform based on a second control strategy when the movable platform is in a landing state, wherein
a first control strategy is based on a body coordinate system of the movable platform, and the second control strategy is based on a photographing frame coordinate system of a photographing device carried by the movable platform.

24. The method according to claim 1, **characterized in that** the motion-sensing controller comprises a scroll wheel, and the method further comprises:
receiving a fourth operation from the user on the scroll wheel; and
the control instruction is further configured to:
control photographing parameters of the photographing device mounted on the movable platform based on the fourth operation.

25. The method according to claim 24, **characterized in that** the scroll wheel is configured to slide while also being pressable to move, and the controlling of the photographing device carried by the movable platform based on the fourth operation comprises at least one of:
controlling the photographing device to adjust the photographing parameters based on a sliding operation of the scroll wheel;
determining the photographing parameters based on a short press operation on the scroll wheel; or
canceling the controlling of the photographing device to adjust the photographing parameters based on a long press operation on the scroll wheel.

26. A motion-sensing controller, **characterized by** comprising:
a housing; and
a trigger assembly, movably connected to the housing, wherein the trigger assembly comprises a trigger and a reset member, the trigger is connected to the reset member and is movable relative to the housing, the reset member is configured to provide a resetting force to position the trigger to a target position, the trigger is configured to receive the resetting force provided by the reset member during a movement from the target position in either a first direction or a second direction.

27. The motion-sensing controller according to claim 26, **characterized in that** the housing comprises a grip part, and for a same movement stroke, the trigger, during a movement from the target position in the first direction, is subjected to a resetting force provided by the reset member that is greater than a resetting force provided by the reset member during a movement from the target position in the second direction, the first direction is a direction in which the trigger moves toward the grip part, and the second direction is a direction in which the trigger moves away from the grip part.

28. The motion-sensing controller according to claim 26, **characterized in that** the reset member comprises an elastic component and a linkage component, an end of the elastic component is fixedly connected to the housing, another end thereof is connected to the linkage component; an end of the linkage component is rotatably connected to the housing, and another end thereof is connected to the elastic component;
the trigger is rotatably connected to the housing and is connected to the linkage component, during a rotation of the trigger from the target position in the first direction and from the target position in the second direction, the trigger drives the end of the linkage component connected to the elastic component to move in a direction away from the elastic component.

29. The motion-sensing controller according to claim 28, **characterized in that** the trigger comprises a rotating component, the rotating component comprises a first shaft, a first protrusion and a second protrusion, the first shaft is rotatably connected to the housing, and the first protrusion and the second protrusion are respectively connected to both sides of the first shaft, extending in different directions;
the linkage component is rotatably connected to the housing, the linkage component abuts against the first protrusion and the second protrusion, and during the rotation of the rotating component along the first shaft, the first protrusion or the second protrusion drives the linkage component to rotate the end of the linkage component connected to the elastic component in the direction away from the elastic component.

30. The motion-sensing controller according to claim 29, **characterized in that** a distance from the end of the second protrusion away from the first shaft to the first shaft is greater than a distance from the end of the first protrusion away from the first shaft to the first shaft.

31. The motion-sensing controller according to claim 29, **characterized in that** the linkage component comprises a second shaft, and the linkage component is rotatably connected to the housing via the second shaft;
a distance from the end of the second protrusion away from the first shaft to the second shaft is greater than a distance from the end of the first protrusion away from the first shaft to the second shaft.

32. The motion-sensing controller according to claim 29, **characterized in that** a rotating groove is arranged between the two ends of the linkage component, and the first shaft is at least partially located within the rotating groove; the first protrusion and the second protrusion are respectively located on both sides of the rotating groove.

33. The motion-sensing controller according to claim 28, **characterized in that** the elastic component is a telescopic spring, an end of the elastic component is fixedly connected to the housing, and another end thereof is fixedly connected to the linkage component.

34. The motion-sensing controller according to claim 29, **characterized in that** the rotating component is located inside the housing.

35. The motion-sensing controller according to claim 26, **characterized in that** the reset member is located inside the housing.

36. The motion-sensing controller according to claim 26, **characterized in that** the trigger comprises a first force application part and a second force application part, the first force application part and the second force application part are located outside the housing, upon receiving a force along the first direction, the first force application part drives the trigger to rotate along the first direction, and upon receiving a force along the second direction, the second force application part drives the trigger to rotate along the second direction.

37. The motion-sensing controller according to claim 36, **characterized in that** a side of the first force application part and a side of the second force application part enclose to form a receiving groove.

38. The motion-sensing controller according to claim 37, **characterized in that** the first force application part and the second force application part are rotatably connected, so that a size of the receiving groove is changeable;
the trigger further comprises a fastener, and when the fastener is in a first state, the first force application part and the second force application part are fixed, when the fastener is in a second state, the first force application part and the second force application part are rotatable relative to each other.

39. The motion-sensing controller according to claim 26, **characterized in that** the motion-sensing controller further comprises a thumbwheel assembly, the thumbwheel assembly is connected to the housing and at least partially located outside the housing;
the thumbwheel assembly comprises a thumbwheel and a connector, the thumbwheel is rotatably connected to the connector and is configured to rotate relative to the connector along a center shaft thereof, the connector is movably connected to the housing, and the connector is configured to move relative to the housing to drive the thumbwheel to move.

40. A control device for a movable platform, **characterized in that** the control device comprises a memory and a processor;
the memory is configured to store a computer program;
the processor is configured to execute the computer program and, while executing the computer program, perform the following steps:
receiving a first operation and a second operation input by a user, wherein the first operation and the second operation are operations on different objects of a motion-sensing controller, and one of the first operation and the second operation is a motion-sensing control operation of the motion-sensing controller, and
in response to the first operation and the second operation, generating a control instruction, wherein the control instruction is used to control the movable platform, and the control instruction causes an angle greater than 0° to be formed between a nose direction of the movable platform and a horizontal component direction of a movement velocity of the movable platform.

41. A movable platform, **characterized in that** the movable platform cmprises the control device as set forth in claim 40.

42. A computer-readable storage medium, **characterized in that** the computer-readable storage medium stores a computer program, and when the computer program is executed by a processor, the processor performs the steps of the control method as set forth in any one of claims 1-25.
